# EUROPEAN PATENT SPECIFICATION

(11) **EP 4 458 631 B1**
(45) Date of publication and mention of the grant of the patent: **06.05.2026**
(21) Application number: 22914387.0
(22) Date of filing: 20.12.2022
(51) Int. Cl.: B60W 30/18, B60W 20/15, B60W 10/26, B60W 10/30, B60W 20/19, B60W 10/06, B60W 10/08, B60W 50/00

(54) **VEHICLE ACCELERATION CONTROL METHOD AND DEVICE, VEHICLE, AND STORAGE MEDIUM**
VERFAHREN UND VORRICHTUNG ZUR FAHRZEUGBESCHLEUNIGUNGSSTEUERUNG, FAHRZEUG UND SPEICHERMEDIUM
PROCÉDÉ ET DISPOSITIF DE COMMANDE D'ACCÉLÉRATION DE VÉHICULE, VÉHICULE, ET SUPPORT DE STOCKAGE

(30) Priority: 28.12.2021 CN 202111626861
(43) Date of publication of application: 06.11.2024
(73) Proprietor: Great Wall Motor Company Limited, Baoding, Hebei 071000 (CN)
(72) Inventor: LIU, Shuai, Baoding, Hebei 071000 (CN); ZHANG, Bo, Baoding, Hebei 071000 (CN)
(74) Representative: Klunker IP Patentanwälte PartG mbB
(86) International application number: PCT/CN2022/140248
(87) International publication number: WO 2023/125133

(56) References cited:
- CN-A- 103 993 967
- CN-A- 109 606 116
- CN-A- 110 979 028
- CN-A- 113 135 097
- CN-A- 115 123 230
- DE-A1- 102012 111 400
- DE-A1- 102019 110 174
- JP-A- 2012 086 803
- JP-A- 2016 166 647
- US-A- 4 898 138
- US-A1- 2007 227 791
- US-A1- 2008 306 670
- US-A1- 2013 275 023

## Description

### TECHNICAL FIELD

The present invention relates to the technical field of vehicle power system, and particularly to an acceleration control method, a vehicle, and a storage medium.

### BACKGROUND

In modern society, the large number of internal combustion locomotives has led to increasingly serious environmental pollution problems, and the fossil fuels they consume are non-renewable. This has made the application of hybrid vehicles increasingly widespread. The commonly referred hybrid vehicles generally refer to hybrid electric vehicles, which use electric motors and traditional internal combustion engines as power sources.

Most hybrid vehicles use batteries as their onboard energy storage carrier. However, the existing batteries have a lower specific power, which limits the acceleration performance of the vehicle. The specific power can characterize the ability of a battery to release or absorb energy per unit time. The higher the specific power, the more energy the battery can release per unit time, and the better the acceleration performance of the vehicle. On the contrary, if the specific power is low, the energy that the battery can release per unit time is limited. Which cannot meet the instantaneous high-power requirement of the vehicle, resulting in poor acceleration performance of the vehicle. To solve this problem, the current common method is to increase the number of the batteries. However, this method will increase the cost and weight of the vehicle.

US 2013/275023 A1 discloses a variable power drive mode system for a vehicle, including a pedal, a processor, an engine or other vehicle power source for moving the vehicle and a battery. The processor of the vehicle determines, either automatically or based upon user input, a desired drive mode for the vehicle. A memory connected with the processor stores different data corresponding to the different drive modes determinable by the processor for the vehicle. The processor uses the different data stored in memory in combination with a position of the pedal to control the engine or other vehicle power source to generate power in accordance with the determined drive mode.

US 4 898 138 A discloses an engine control apparatus including an operation amount detection section for detecting an operation amount of an acceleration pedal, a throttle valve for adjusting an engine output, an arithmetic section for receiving the output from the operation amount detection section and calculating a control amount corresponding to the output operation amount of the acceleration pedal in accordance with a predetermined characteristic, the control amount being one for controlling the throttle valve, a motor for receiving the output from the arithmetic section and driving the throttle valve in accordance with the control amount calculated by the arithmetic section, a return detection section for detecting a return state of the acceleration pedal, and a control section for, when the return detection section detects the return state of the acceleration pedal, controlling the arithmetic section to output the control amount in accordance with a characteristic with which the engine output is decreased below that according to the predetermined characteristic.

US 2008/306670 A1 discloses a power boost system and method for temporarily boosting power available to a vehicle having a vehicle engine and accessories, wherein an operator interface has a system activation button; a vehicle system controller is connected to the operator interface; the accessories are connected to the vehicle system controller; and at least the operation of the accessories is suppressed by operation of the operator interface.

### SUMMARY

It is an object of the present invention to provide an acceleration control method, a vehicle, and a storage medium, to solve a technical problem of poor short-time acceleration capability in existing pure electric or hybrid electric vehicles.

The object is achieved by the features of independent claim 1 regarding the acceleration control method, of independent claim 13 regarding the vehicle, and of independent claim 14 regarding the storage medium.

The present invention has the following advantages:
In the acceleration control method of the vehicle provided by the present invention, it is determined whether the vehicle satisfies the short-time power assistance activation condition according to the vehicle operating parameter, and after entering the short-time power assistance mode, the driving capability of the entire vehicle can be improved. That is, the upper limit of the calibration output torque of the entire vehicle is improved, the discharge power and drive torque of the drive component is improved, and the upper limit of the calibration drive parameter of the drive component is improved, so that the torque request of the driver is responded to within the corresponding controllable output torque range, and will not be unable to obtain the response of the corresponding output torque due to the torque request being too large. The acceleration control method of the vehicle provided by the present invention can improve the instantaneous driving capability of the drive component, enabling the entire vehicle to have better instantaneous acceleration capability and meet the short-time acceleration requirements of the driver, thereby solving the technical problem of poor short-time acceleration capability in existing pure electric or hybrid electric vehicles.

### BRIEF DESCRIPTION OF THE DRAWINGS

In order to more clearly illustrate the technical solutions of the present invention, the figures that are required to describe the invention or the prior art will be briefly described below.
FIG. 1 is a flow chart for implementing an acceleration control method of a vehicle;
FIG. 2 is another flow chart for implementing an acceleration control method of a vehicle;
FIG. 3 is a schematic diagram of structural composition of an acceleration control device of a vehicle;
FIG. 4 is another schematic diagram of structural composition of an acceleration control device of a vehicle; and
FIG. 5 is a schematic diagram of structural composition of an electronic device.

### DETAILED DESCRIPTION

In the following description, specific details such as specific system structures and technologies are provided for illustrating purposes rather than limitation, to facilitate a thorough understanding of the present invention. The detailed descriptions of well-known systems, devices, circuits, and methods are omitted to avoid unnecessary details hindering the description of the present invention.

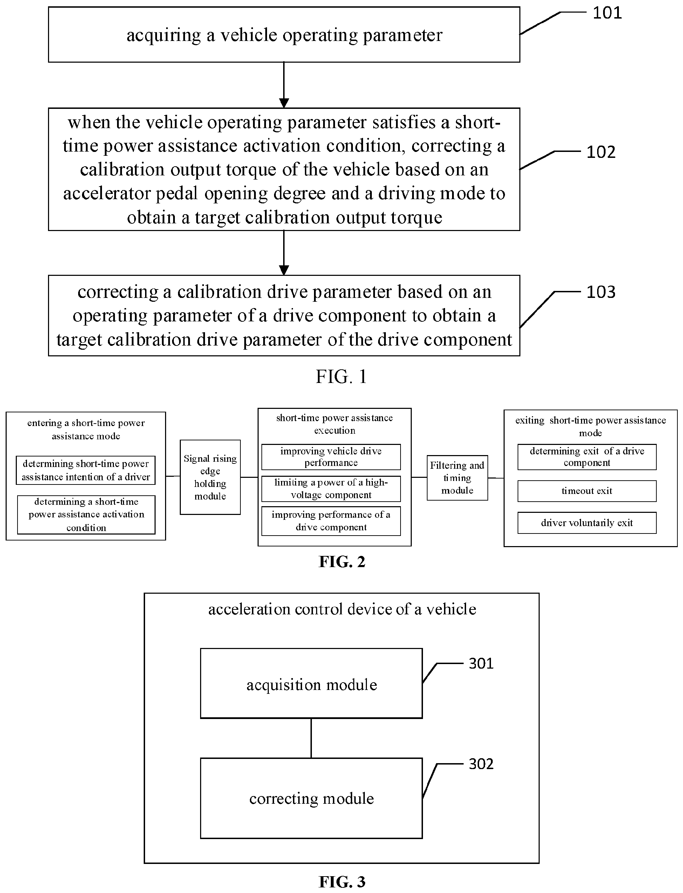

FIG. 1 is a flow chart for implementing an acceleration control method of a vehicle. The method shown in FIG. 1 includes three steps, i.e., step 101 to step 103, which are described in detail below.

Step 101, acquiring a vehicle operating parameter.

The purpose of acquiring the vehicle operating parameter is to detect whether the driver has a short-time power assistance intention according to the vehicle operating parameter; when it is detected that the driver has the short-time power assistance intention, it is further determined whether the vehicle operating parameter satisfies the short-time power assistance activation condition. When the vehicle operating parameter satisfies the short-time power assistance activation condition, the operation of step 102 is performed.

The vehicle operating parameters include at least the parameters, such as a position of a gear lever, a brake pedal opening degree, the accelerator pedal opening degree, a vehicle mode, a torque output, an engine speed, SOC (State of Charge) of a battery, a discharge power of the battery, a battery temperature and an electric-motor temperature during the operation of the vehicle.

The conditions for the driver to have the short-time power assistance intention include: a current gear lever is in a drive gear, the brake pedal opening degree is zero, an electrical park brake system is not enabled, the accelerator pedal opening degree is greater than a preset pedal opening degree, a rate of change in the accelerator pedal opening degree is greater than a preset rate of change, the vehicle mode is a preset mode, and a difference between a requesting torque and a calibration torque is less than a preset torque value.

Among them:
the drive gears include D gear (drive), R gear (reverse), or M gear (manual);
the brake pedal opening degree is zero, which means the driver did not step on the brake pedal and did not brake;
the preset pedal opening can be set to 70%, 80%, 85%, etc., with a preferred value of 80%;
the preset rate of change in the accelerator pedal opening degree can be set to 35%, 40%, 50%, etc., with a preferred value of 40%;
the preset mode can be a sport mode, a sport plus mode, and some modes adapted to the terrain, such as a snow mode, a sand mode, or a mud mode;
the calibration torque is a torque corresponding to a steady-state driving of the entire vehicle; when the difference between the requesting torque and the calibration torque is less than the preset torque value, the increase in the requesting torque compared to the calibration torque is relatively small, which allows the torque to smoothly change before and after short-time power assistance activation without creating a drop pit.

When the vehicle operating parameter does not satisfy any one of the above conditions, it is determined that the driver has no short-time power assistance intention and the process ends.

The short-time power assistance activation permit is the first level of protection that ensures the overall vehicle performance during and after the short-time power assistance activation period. The present invention relates to third levels of vehicle protection for overall vehicle performance, from the first level to the third level, the requirements for short-time power assistance in the vehicle protection at all levels are gradually becoming stricter.

The conditions for the vehicle operating parameter to satisfy the short-time power assistance activation condition include: the engine is started and the engine speed is within the calibration speed range; and, the operation states of the electric motor, the engine, and the battery are normal; and, the SOC of the battery is greater than the preset SOC; and, a difference between an actual discharge power of the battery and a maximum dynamic discharge power is greater than a preset discharge power value; and, the battery temperature and the electric-motor temperature are within the preset temperature range.

Among them:
determining that the engine speed is within a normal range is to provide speed protection for the engine; when the engine speed is high, the short-time power assistance will not be activated to prevent the engine damage due to excessive speed.

The batteries include a high-voltage battery and a low-voltage battery. The high-voltage battery provides power for the vehicle, while the low-voltage battery provides power supply for the instruments of the vehicle; the SOC of the battery is greater than the preset SOC, which means that the SOC of the high-voltage battery is greater than the preset SOC. This is to ensure that during the short-time power assistance activation period, the SOC of the high-voltage battery is within a safe range and can provide sufficient discharge power; and the preset SOC can be calibrated based on a battery capacity and a rated power.

The difference between the actual discharge power of the battery and the maximum dynamic discharge power is greater than the preset discharge power value, which can ensure that the actual discharge power of the battery will not exceed the maximum dynamic discharge power of the battery due to the short-time power assistance activation; and the preset discharge power value can be calibrated based on the actual discharge power of the battery and the maximum dynamic discharge power of the battery.

The battery temperature includes a maximum temperature of the battery and a minimum temperature of the battery; the electric-motor temperature includes a cooling water temperature, a controller temperature and a stator temperature of the electric motor.

When any one of the short-time power assistance activation conditions mentioned above is not satisfied, the process ends.

Step 102, when the vehicle operating parameter satisfies a short-time power assistance activation condition, correcting a calibration output torque of the vehicle based on an accelerator pedal opening degree and a vehicle mode to obtain a target calibration output torque, the target calibration output torque being greater than the calibration output torque.

When all the vehicle operating parameters satisfy the short-time power assistance activation condition, setting a short-time power assistance activation flag bit, and entering a short-time power assistance mode. In the short-time power assistance mode, through the step 102 and step 103, the performance of the vehicle is improved and the instantaneous driving capability of the entire vehicle is improved according to the torque path controlled by the vehicle. Because the initial torque request corresponds to the overall vehicle level, the first step is to improve the overall vehicle performance; and then the torque request is allocated to each drive component in the torque path, and the performance of each drive component is improved accordingly.

The first step is to improve the overall vehicle performance, it should be noted that when improving the overall vehicle performance, the limitation for the driving capability of the entire vehicle is increased. That is, the limitation is released, and the calibrated output torque threshold is increased. When improving the overall vehicle performance here, the focus is not on the operations used to enhance the driving capability of the entire vehicle. In the step 102, the existing calibration output torque corresponding to the accelerator pedal opening degree request of the driver is increased on the basis of the original values, thereby increasing the output torque threshold and releasing the torque limitation from the source. Furthermore, even if the vehicle performs existing operations, the overall driving performance can still be improved due to the increase in the output torque threshold.

The following step in the step 102: correcting the calibration output torque of the vehicle based on the accelerator pedal opening degree and the vehicle mode to obtain the target calibration output torque, may include step 1 to step 4.

Step 1, acquiring the accelerator pedal opening degree and a current vehicle mode.

The vehicle mode may be a sport mode, a sport plus mode, a snow mode, a sand mode, or a mud mode.

Step 2, determining the calibration output torque corresponding to the accelerator pedal opening degree based on the current vehicle mode.

The accelerator pedal corresponds to different acceleration curve charts in different vehicle modes. The acceleration curve charts can reflect the corresponding relationship between the accelerator pedal opening degree and the output torque. In the step 1 and the step 2, the corresponding acceleration curve charts can be determined based on the current vehicle mode first; and then the corresponding output torque is determined from the determined acceleration curve charts based on the accelerator pedal opening degree. The output torque is an output torque under a normal operating state of the vehicle, therefore it is referred to as the calibration output torque in the present invention.

Step 3, determining a corresponding output torque corrected value based on the accelerator pedal opening degree.

In this step, the corresponding output torque correction value can be determined by looking up a table based on the accelerator pedal opening degree. The table can be an accelerator pedal opening degree-output torque correction value preset table, in the preset table, different accelerator pedal opening degrees correspond to different output torque correction values; the greater the accelerator pedal opening degree, the greater the torque requested by the driver and the greater the willingness to accelerate, therefore, the larger the corresponding output torque correction value that should be set, to meet the acceleration requirements of the driver.

For example, when the accelerator pedal opening degree is 60, the output torque correction value may be 0.9; when the accelerator pedal opening degree is 70, the output torque correction value may be 0.95; when the accelerator pedal opening degree is 80, the output torque correction value may be 1; when the accelerator pedal opening degree is 85, the output torque correction value may be 1.1; when the accelerator pedal opening degree is 90, the output torque correction value may be 1.2; and when the accelerator pedal opening degree is 95, the output torque correction value may be 1.25, and so on. The above examples are for illustration only, the accelerator pedal opening degree and corresponding output torque correction value can be set according to actual requirements.

Step 4, calculating a sum of the output torque corrected value and the calibration output torque, to obtain the target calibration output torque.

The obtained target calibration output torque is higher than the calibration output torque, which increases the output torque threshold corresponding to the accelerator pedal opening degree request of the driver, thereby improving the overall driving capability of the entire vehicle.

After the performance improvement of the entire vehicle is completed, it is necessary to further improve the performance of each component. Otherwise, in subsequent execution, the performance improvement of the entire vehicle will be limited by the requirements of each component, resulting in the inability to achieve short-time acceleration of the entire vehicle.

After the overall vehicle performance is improved, the torque request is allocated to the drive components in the torque path, and a high-voltage component can be limited at this time. That is, after step 102 and before step 103, the acceleration control method of the vehicle further includes: limiting a power of a high-voltage component to a preset power value. In order to allocate more power to the drive components, we need to impose power limitation on other power consuming components (such as the high-voltage component mentioned above) as long as to ensure their basic power requirements. Then, the performance improvement of the drive components can be performed.

The high-voltage component may include an air conditioner and a DCDC (Direct current-Direct current) converter.

The step of limiting the power of the high-voltage component to the preset power value includes:
setting an output power of the air conditioner to a lowest gear of a calibration gear;
calculating a calibrated charging power based on SOC of a low-voltage battery on a low-voltage side of the DCDC converter, the calibrated charging power being a charging power calculated based on a minimum voltage electricity consumption of the low-voltage battery; and setting a charging power of the low-voltage battery to the calibrated charging power.

It should be noted that there is no sequence for limiting operations of the air conditioner and the DCDC converter. The limitation of the air conditioner can be executed first, followed by the limitation of the DCDC converter. Alternatively, the limitation of the DCDC converter may be executed first, and then the limitation of the air conditioner is executed.

The various calibration gears of the air conditioner correspond to different output powers of the air conditioner, and different output powers of the air conditioner have different temperature adjustment effects. When setting the output powers of the air conditioner to the lowest gear of the calibration gear, it can not only ensure that the cabin temperature is appropriate and but also reduce the output power of the air conditioner.

Step 103, correcting a calibration drive parameter based on an operating parameter of a drive component to obtain a target calibration drive parameter of the drive component, a corresponding value of the target calibration drive parameter being greater than a corresponding value of the calibration drive parameter.

This step achieves performance improvement of the drive components. The drive components have been upgraded to the basic execution part of short-time driving, and also serve as the second level of protection to ensure the overall vehicle performance during and after short-time power assistance activation period. While improving the performance of the drive components, the normal operation of the vehicle after the short-time power assistance exits is considered.

The drive components may include the battery and the electric motor. The discharge power of the battery can provide driving force for the vehicle, while the electric motor can provide drive torque for the vehicle.

When the drive component is the battery, a part of step 103: correcting the calibration drive parameter based on the operating parameter of the drive component to obtain the target calibration drive parameter of the drive component, may include the following steps: acquiring a dynamic discharge power of the battery; switching a discharge power of the battery to a calibration dynamic discharge power; acquiring a dynamic discharge power correction factor; and correcting the calibration dynamic discharge power according to the dynamic discharge power correction factor, to obtain a target calibration discharge power.

The dynamic discharge power of the battery is relatively high, which is several kilowatts higher than the sustainable discharge power of the battery at the room temperature, and can provide high discharge power for a short time for the vehicle. Therefore, after the short-time power assistance mode is activated, the available power of the vehicle can be switched from the sustainable discharge power to the dynamic discharge power.

The dynamic discharge power correction factor may be acquired by the following steps: acquiring a maximum temperature and a minimum temperature of the battery; calculating an average temperature of the battery according to the maximum temperature and the minimum temperature; and acquiring SOC of the battery, and obtaining the corresponding dynamic discharge power correction factor by looking up a table according to the SOC and the average temperature.

When collecting the battery temperature, the battery management system can collect the temperatures of a plurality of temperature sensors disposed at different positions on the battery module, thereby determining the maximum temperature and the minimum temperature from a plurality of temperatures. The maximum temperature or the minimum temperature of the battery module used alone cannot reflect the current actual state of the battery. Therefore, the maximum temperature and the minimum temperature can be weighted to obtain the average temperature of the battery.

A corresponding weighting factor is obtained by looking up a table according to the minimum temperature of the battery, and then the average temperature of the battery is calculated according to HVBT=X*HVBLT+(1-X)*HVBHT. Where HVBT represents the average temperature of the battery, X represents the weighting factor corresponding to the minimum temperature of the battery at current time (different minimum temperatures correspond to different weighting factors), HVBLT represents the minimum temperature of the battery at current time, and HVBHT represents the maximum temperature of the battery at current time.

After obtaining the average temperature of the battery, the corresponding dynamic discharge power correction factor can be obtained by looking up the preset table based on the SOC and average temperature of the battery. The preset table can reflect the corresponding relationship between the SOC, average temperature, and dynamic discharge power correction factor of the battery.

It should be noted that, the maximum duration T1 of the short-time power assistance for the corresponding battery can also be obtained by looking up the preset table mentioned above. That is to say, the above preset table can reflect the corresponding relationship between the SOC, average temperature dynamics, discharge power correction factor, and T1 of the battery. The maximum duration of the short-time power assistance here limits the duration of the short-time power assistance for the battery; after exceeding this duration, the output power of the battery will decrease. Therefore, the maximum duration of the short-time power assistance for the battery can be used to determine when to exit the short-time power assistance mode.

Finally, based on the sum of the dynamic discharge power correction factor and the calibration dynamic discharge power, the target calibration discharge power is obtained, so that the target calibration discharge power of the battery can be improved based on the current operating parameters of the battery.

When the drive component is the electric motor, a part of the step 103: correcting the calibration drive parameter based on the operating parameter of the drive component to obtain the target calibration drive parameter of the drive component, may include the following steps A to D.

Step A, acquiring a cooling water temperature, a controller temperature and a stator temperature of the electric motor; when improving the performance of the electric motor, the drive torque is mainly determined based on the temperature of the electric motor.

Step B, determining a corresponding calibration drive torque by looking up a table according to the cooling water temperature; according to this table, the corresponding maximum duration T2 of the short-time power assistance for the electric motor can also be determined. That is to say, this table can reflect the corresponding relationship between cooling water temperature, drive torque, and the maximum duration of the short-time power assistance. The maximum duration of the short-time power assistance here limits the duration of the short-time power assistance for the electric motor; after exceeding this duration, the drive torque of the electric motor will decrease. Therefore, the maximum duration of the short-time power assistance for the electric motor can be used to determine when to exit the short-time power assistance mode.

When the drive component is the electric motor, the short-time power assistance of the vehicle is divided into two stages. Step C, in a first stage of the short-time power assistance, determining a corresponding first torque correction factor by looking up a table according to the controller temperature, and calculating a sum of the first torque correction factor and the calibration drive torque, to obtain a target calibration drive torque corresponding to the first stage.

In the first stage of the short-time power assistance, the electric motor is in a stage with a low speed and a high torque, and the temperature of the controller of the electric motor rises rapidly, which is the actual temperature that affects the driving capability of the electric motor at this time. Therefore, the first torque correction factor is determined based on the controller temperature.

Step D, in a second stage of the short-time power assistance, determining a corresponding second torque correction factor by looking up a table according to the stator temperature, and calculating a sum of the second torque correction factor and the calibration drive torque, to obtain a target calibration drive torque corresponding to the second stage.

In the second stage of the short-time power assistance, the entire vehicle is in a stage with rapid acceleration at a mid-high speed, and the stator temperature of the electric motor rises rapidly, which is the actual temperature that affects the driving capability of the electric motor at this time. Therefore, the second torque correction factor is determined based on the stator temperature.

By using different torque correction factors at different stages of the short-time power assistance, the calibrated drive torque may be corrected accurately at different stages of the short-time power assistance, to obtain an accurate target calibration drive torque, and maximize the power performance of the electric motor. Moreover, different torque correction factors are used at different stages of the short-time power assistance, which can ensure that the electric motor will not be damaged due to overheating during the short-time power assistance. At the same time, it can also ensure that the electric motor can be quickly cooled down and return to the normal operating state after the short-time power assistance is completed.

After the step 103, the acceleration control method of the vehicle further includes the following step: when the vehicle operating parameter satisfies a short-time power assistance exit condition, exiting a short-time power assistance mode.

The short-time power assistance exit condition may include three conditions, when any one of the conditions is satisfied, the short-time power assistance mode can be exited. The first condition is the exit of the drive component, the second condition is timeout, and the third condition is receiving the exit signal.

Among them, the exit of the drive component includes battery protection exit and electric-motor protection exit, which are the third level of protection that ensures the overall vehicle performance after exiting the short-time power assistance activation.

When the difference between the maximum temperature of the battery and the maximum temperature at which the battery can continue to operate is less than the preset temperature value, the short-time power assistance mode is exited. In order to avoid the battery temperature being too high, which may cause a drop pit in the discharge power of the vehicle when exiting the short-time power assistance mode.

When the SOC of the battery is lower than the SOC corresponding to electricity balance of the battery, the short-time power assistance is exited to maintain electricity balance.

When the difference between the battery discharge power and the maximum dynamic discharge power is less than the preset discharge power value and lasts for a preset time, in order to prevent excessive battery discharge and battery damage, it is necessary to forcibly exit short-time power assistance. The preset time lasting for here can be obtained by looking up a table based on the difference between the battery discharge power and the maximum dynamic discharge power.

When any one of the cooling water temperature, controller temperature, or stator temperature of the electric motor is greater than or equal to the preset temperature value, the short-time power assistance mode is exited to prevent irreversible damage to the electric motor.

The condition for timeout exit is that the duration of the short-time power assistance is greater than or equal to the smaller of T₁ and T₂. T₁ and T₂ are the longest duration of the short-time power assistance corresponding to the battery and electric motor, respectively. If it is exceeded, it will cause damage to the battery or electric motor. Therefore, the duration of the short-time power assistance is limited to the smaller of the two.

For the third exit condition mentioned above, which is receiving the exit signal, and the exit signal is provided by the driver. That is to say, the third exit condition mentioned above is actually for the driver to voluntarily exit. The exit signal may be an accelerator pedal opening degree signal. When the accelerator pedal opening degree is less than the preset opening degree, the short-time power assistance mode is exited. The preset opening degree here can be 50%, 60%, etc., with a preferred value of 60%.

It should be noted that when exiting the short-time power assistance mode, the discharge power of the battery and the output torque gradient of the electric motor decrease, rather than immediately decreasing to the original normal operating level, in order to ensure smooth torque transfer and prevent the occurrence of driving drop pits.

Referring to FIG. 2, in addition to the processes, such as entering the short-time power assistance mode, executing the short-time power assistance, and exiting the short-time power assistance mode involved in the acceleration control method of the vehicle described in the above methods, a signal rising edge holding module can be set up after entering the short-time power assistance mode, such as an SR trigger. After activating the short-time power assistance mode, the rising edge holding module holds all signals that can be obtained to prevent other signals from affecting the current short-time power assistance mode, until the condition for exiting the short-time power assistance mode is activated, the SR trigger returns to the reset state.

During the execution of the short-time power assistance, due to the limitations of the battery and electric motor on the duration of the short-time power assistance, the participation of a timing module is required to determine when to exit the short-time power assistance mode based on the timing time. In addition, a filtering module can be set up to filter various signals output during the short-time power assistance execution process.

In the acceleration control method of the vehicle, after entering the short-time power assistance mode, the driving capability of the entire vehicle can be improved. The power of high-voltage component is limited, so that more power can be allocated to the drive components, thus increasing the discharge power and drive torque of the drive components, which can enable the drive component has a higher instantaneous driving capability, and meet the short-time acceleration requirements of the driver, to make the entire vehicle has a better instantaneous acceleration capability, thereby solving the technical problem of poor short-time acceleration capability in existing pure electric or hybrid electric vehicles. The above acceleration control method of the vehicle also sets up a three-level vehicle performance protection mechanism to ensure that the vehicle can not only improve its overall performance by activating the short-time power assistance, but also ensure smooth torque transfer and prevent the occurrence of driving drop pits after exiting the short-time power assistance mode.

It should be understood that the size of the sequence number of each step in the above does not imply the order of execution, and the order of execution of each process should be determined by its function and internal logic; the sequence number of each step should not constitute any limitation on the implementation process of the present invention defined in the claims.

The following is a device that may implement the present invention. For details not described in detail, please refer to the corresponding method mentioned above.

FIG. 3 is a schematic diagram of the structural composition of the acceleration control device of the vehicle. For ease of explanation, only the parts related to the present invention are shown in this figure, as detailed below.

As shown in FIG. 3, the acceleration control device of the vehicle includes: an acquisition module 301 and a correcting module 302.

The acquisition module 301 is configured for acquiring a vehicle operating parameter.

The correcting module 302 is configured for, when the vehicle operating parameter satisfies a short-time power assistance activation condition, correcting a calibration output torque of the vehicle based on an accelerator pedal opening degree and a vehicle mode to obtain a target calibration output torque, the target calibration output torque being greater than the calibration output torque.

The correcting module 302 is further configured for correcting a calibration drive parameter based on an operating parameter of a drive component to obtain a target calibration drive parameter of the drive component, and a corresponding value of the target calibration drive parameter is greater than a corresponding value of the calibration drive parameter.

The correcting module 302 may correct the calibration output torque of the vehicle based on the accelerator pedal opening degree and the vehicle mode to obtain the target calibration output torque, and the correcting module 302 is configured for:
acquiring the accelerator pedal opening degree and a current vehicle mode;
determining the calibration output torque corresponding to the accelerator pedal opening degree based on the current vehicle mode;
determining a corresponding output torque corrected value based on the accelerator pedal opening degree; and
calculating a sum of the output torque corrected value and the calibration output torque, to obtain the target calibration output torque.

After the correcting module 302 corrects the calibration output torque of the vehicle based on the accelerator pedal opening degree and the vehicle mode to obtain the target calibration output torque, and before the correcting module 302 corrects the calibration drive parameter based on the operating parameter of the drive component to obtain the target calibration drive parameter of the drive component, the correcting module 302 may be further configured for: limiting a power of a high-voltage component to a preset power value.

Among them, the high-voltage component includes an air conditioner and a DCDC (Direct current-Direct current) converter;
the correcting module 302 limits the power of the high-voltage component to the preset power value, and the correcting module 302 is configured for:
setting an output power of the air conditioner to a lowest gear of a calibration gear;
calculating a calibrated charging power based on SOC (State of Charge) of a low-voltage battery on a low-voltage side of the DCDC converter, the calibrated charging power being a charging power calculated based on a minimum voltage electricity consumption of the low-voltage battery; and setting a charging power of the low-voltage battery to the calibrated charging power.

The drive component may include a battery;
the correcting module 302 corrects the calibration drive parameter based on the operating parameter of the drive component to obtain the target calibration drive parameter of the drive component, and the correcting module 302 is configured for:
acquiring a dynamic discharge power of the battery;
switching a discharge power of the battery to a calibration dynamic discharge power;
acquiring a dynamic discharge power correction factor; and
correcting the calibration dynamic discharge power according to the dynamic discharge power correction factor, to obtain a target calibration discharge power.

The correcting module 302 may acquire the dynamic discharge power correction factor, and the correcting module 302 is configured for:
acquiring a maximum temperature and a minimum temperature of the battery;
calculating an average temperature of the battery according to the maximum temperature and the minimum temperature; and
acquiring SOC of the battery, and obtaining the corresponding dynamic discharge power correction factor by looking up a table according to the SOC and the average temperature.

The drive component includes an electric motor; short-time power assistance of the vehicle may be divided into two stages;
the correcting module 302 corrects the calibration drive parameter based on the operating parameter of the drive component to obtain the target calibration drive parameter of the drive component, and the correcting module 302 is configured for:
acquiring a cooling water temperature, a controller temperature and a stator temperature of the electric motor;
determining a corresponding calibration drive torque by looking up a table according to the cooling water temperature;
in a first stage of the short-time power assistance, determining a corresponding first torque correction factor by looking up a table according to the controller temperature, and calculating a sum of the first torque correction factor and the calibration drive torque, to obtain a target calibration drive torque corresponding to the first stage; and
in a second stage of the short-time power assistance, determining a corresponding second torque correction factor by looking up a table according to the stator temperature, and calculating a sum of the second torque correction factor and the calibration drive torque, to obtain a target calibration drive torque corresponding to the second stage.

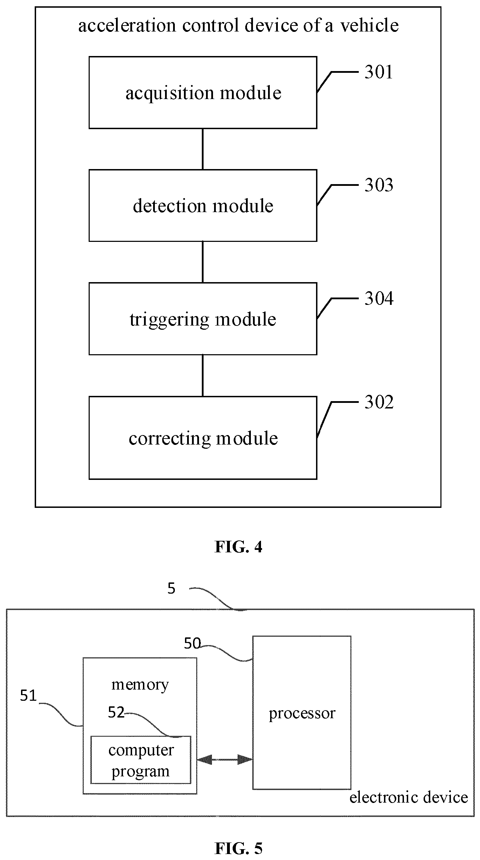

As shown in FIG. 4, the acceleration control device of the vehicle may further include: a detection module 303 and a triggering module 304.

After the acquisition module 301 acquires the vehicle operating parameter, the detection module 303 is configured for detecting whether a driver has a short-time power assistance intention according to the vehicle operating parameter.

The detection module 303 is further configured for, when it is detected that the driver has the short-time power assistance intention, detecting whether the vehicle operating parameter satisfies the short-time power assistance activation condition.

The triggering module 304 is configured for setting a short-time power assistance activation flag bit, and entering a short-time power assistance mode.

After the correcting module 302 corrects the calibration drive parameter based on the operating parameter of the drive component to obtain the target calibration drive parameter of the drive component, when the vehicle operating parameter satisfies a short-time power assistance exit condition, the triggering module 304 is further configured for exiting a short-time power assistance mode.

In the acceleration control device of the vehicle, after the vehicle enters the short-time power assistance mode, the correcting module can improve the driving capability of the entire vehicle. The power of high-voltage component is limited, so that more power can be allocated to the drive components, thus increasing the discharge power and drive torque of the drive components, which can enable the drive component has a higher instantaneous driving capability, and meet the short-time acceleration requirements of the driver, to make the entire vehicle has a better instantaneous acceleration capability, thereby solving the technical problem of poor short-time acceleration capability in existing pure electric or hybrid electric vehicles. The above acceleration control device of the vehicle also sets up a three-level vehicle performance protection mechanism to ensure that the vehicle can not only improve its overall performance by activating the short-time power assistance, but also ensure smooth torque transfer and prevent the occurrence of driving drop pits after exiting the short-time power assistance mode.

The present application also provides a vehicle, and the vehicle includes an electronic device shown in FIG. 5. As shown in FIG. 5, the electronic device 5 includes: a processor 50, a memory 51, and a computer program 52 stored in the memory 51 and executable on the processor 50. The processor 50, when executes the computer program 52, implements the steps of the acceleration control method of the vehicle as described above, such as step 101 to step 103 shown in FIG. 1. Alternatively, when the processor 50 executes the computer program 52, it implements the functions of each module/unit in the above device, such as the functions of modules 301 to 302 shown in FIG. 3 or the functions of modules 301 to 304 shown in FIG. 4.

For example, the computer program 52 can be divided into one or more modules/units. For example, the computer program 52 can be divided into modules 301 to 302 shown in FIG. 3 or modules 301 to 304 shown in FIG. 4. These modules/units can be stored in the memory 51 and executed by the processor 50 to implement the various implementations described above. These modules/units can be a series of computer program instruction segments capable of performing specific functions, and which can describe the execution process of the computer program 52 in the electronic device 5.

The electronic device 5 may include, but is not limited to, a processor 50 and a memory 51. Persons skilled in the art can understand that FIG. 5 is only an example of the electronic device 5 and does not constitute a limitation on the electronic device 5. The electronic device 5 may include more or fewer components than components shown in the figure, or a combination of certain components, or different components. For example, electronic device 5 may also include input/output devices, network access devices, buses, etc.

The processor 50 can be a Central Processing Unit (CPU), as well as other general-purpose processors, Digital Signal Processor (DSP), Application Specific Integrated Circuit (ASIC), Field-Programmable Gate Array (FPGA), or other programmable logic devices, discrete gates or transistor logic devices, discrete hardware components, etc. The above-mentioned general-purpose processor can be a microprocessor or any other conventional processor, etc.

The memory 51 can be an internal storage unit of the electronic device 5, such as the hard drive or memory of the electronic device 5. The memory 51 can also be an external storage device of the electronic device 5, such as a plug-in hard drive, Smart Media Card (SMC), Secure Digital (SD) card, Flash Card, etc. equipped on the electronic device 5. Furthermore, the memory 51 can also include both internal storage units of the electronic device 5 and external storage devices. The memory 51 is used to store the computer programs 52 and other programs and data required by the electronic device 5. The memory 51 can also be used to temporarily store data that has been or will be output.

Persons skilled in the art can clearly understand that, for the sake of convenience and simplicity in description, only the division of the above functional units and modules will be illustrated with examples. In practical applications, the above function allocation can be completed by different functional units or modules as needed, that is, the internal structure of the device can be divided into different functional units or modules to complete all or part of the functions described above. The various functional units and modules can be integrated into one processing unit, or they can exist separately physically, or two or more units can be integrated into one unit. The integrated units mentioned above can be implemented in the form of hardware or software functional units. In addition, the specific names of each functional unit and module are only for the purpose of distinguishing them from each other and are not intended to limit the scope of protection of the present invention as defined by the claims. The specific working process of the units and modules in the above device can refer to the corresponding process of the aforementioned methods, and will not be repeated here.

In the above, the descriptions have their own emphasis. For the parts that are not detailed or recorded in one location, please refer to the relevant descriptions of other locations.

Persons skilled in the art can realize that the units and algorithm steps described in the present application can be implemented through the electronic hardware, or a combination of the computer software and the electronic hardware. Whether these functions are executed in the hardware or the software depends on the specific application and design constraint conditions of the technical solution. Persons skilled in the art can use different methods to achieve the described functions for each specific application, but these implementation methods should not be considered beyond the scope of the present invention as defined in the claims.

It should be understood that the disclosed devices/electronic devices and methods can be implemented in other ways. For example, the device/electronic device described above is only illustrative. For example, the division of the modules or units is only a logical functional division, and there may be other ways of division in actual implementation. For example, multiple units or components can be combined or integrated into another system, or some features can be ignored or not executed. On the other hand, the mutual coupling or direct coupling or communication connection displayed or discussed can be indirect coupling or communication connection through some interfaces, devices or units, which can be electrical, mechanical or other forms.

The units described as separate components may or may not be physically separated, and the components displayed as units may or may not be physical units. That is, the above components and units can be located in one place or distributed across multiple network units.

When integrated modules/units are implemented in the form of software functional units and sold or used as independent products, they can be stored in a computer-readable storage medium. Based on this understanding, the present invention implements all or part of the processes in the above-mentioned methods, which can be completed by controlling the relevant hardware through the computer programs. The computer program can be stored in a computer-readable storage medium, and when executed by a processor, it can implement the steps of the various acceleration control methods of the vehicle described above. Among them, the computer programs include computer program codes, which can be in the form of source codes, object codes, executable files, or some intermediate forms. The computer-readable medium can include: any entity or device capable of carrying the computer program codes, recording mediums, USB flash drives, portable hard drives, magnetic disks, optical disks, computer memory, read-only memory (ROM), random access memory (RAM), electric carrier signals, telecommunications signals, and software distribution medium.

## Claims

1. An acceleration control method of a vehicle, the method comprising:
(S101) acquiring a vehicle operating parameter;
when the vehicle operating parameter satisfies a short-time power assistance activation condition:
(S102) correcting a calibration output torque threshold based on an accelerator pedal opening degree and a vehicle mode to obtain a target calibration output torque threshold , the target calibration output torque threshold being obtained by adding a positive output-torque correction value selected from a preset table according to the accelerator pedal opening degree to the calibration output torque threshold; and
(S103) correcting, in response to the activation condition, a calibration drive parameter based on an operating parameter of a drive component to obtain a target calibration drive parameter of the drive component, the target calibration drive parameter being obtained by adding a positive correction value or factor selected from a preset table according to the operating parameter to the calibration drive parameter, wherein the short-time power assistance activation condition comprises that an engine is started and an engine speed is within a calibration speed range, the operation states of an electric motor, the engine and a high-voltage battery are normal, a State of Charge, SOC, of the high-voltage battery is greater than a preset SOC, a difference between an actual discharge power of the battery and a maximum dynamic discharge power is greater than a preset discharge-power value, and a battery temperature and an electric-motor temperature are within preset temperature ranges.

2. The acceleration control method of the vehicle according to claim 1, wherein correcting the calibration output torque threshold of the vehicle based on the accelerator pedal opening degree and the vehicle mode to obtain the target calibration output torque threshold comprises:
(Step 1) acquiring the accelerator pedal opening degree and the current vehicle mode;
(Step 2) determining the calibration output torque threshold corresponding to the accelerator pedal opening degree based on the current vehicle mode;
(Step 3) determining a corresponding output torque corrected value based on the accelerator pedal opening degree; and
(Step 4) calculating a sum of the output-torque corrected value and the calibration output torque threshold, to obtain the target calibration output torque threshold.

3. The acceleration control method of the vehicle according to claim 1, wherein after correcting the calibration output torque threshold of the vehicle based on the accelerator pedal opening degree and the vehicle mode to obtain the target calibration output torque threshold, and before correcting the calibration drive parameter based on the operating parameter of the drive component to obtain the target calibration drive parameter of the drive component, the acceleration control method of the vehicle further comprises: limiting a power of a high-voltage component to a preset power value.

4. The acceleration control method of the vehicle according to claim 3, wherein the high-voltage component comprises an air conditioner and a Direct current-Direct current, DCDC, converter;
limiting the power of the high-voltage component to the preset power value comprises:
setting an output power of the air conditioner to a lowest calibration gear corresponding to a lowest calibrated output level;
calculating a calibrated charging power based on a SOC of a low-voltage battery on a low-voltage side of the DCDC converter, the calibrated charging power being a charging power calculated based on a minimum voltage electricity consumption of the low-voltage battery; and
setting a charging power of the low-voltage battery to the calibrated charging power.

5. The acceleration control method of the vehicle according to claim 1, wherein correcting the calibration drive parameter based on the operating parameter of the drive component to obtain the target calibration drive parameter of the drive component comprises:
acquiring a dynamic discharge power of the battery;
switching a discharge power of the battery to a calibration dynamic discharge power;
acquiring a dynamic discharge power correction factor; and
correcting the calibration dynamic discharge power by adding the dynamic discharge power correction factor selected from a
preset table, to obtain a target calibration discharge power.

6. The acceleration control method of the vehicle according to claim 5, wherein acquiring the dynamic discharge power correction factor comprises:
acquiring a maximum temperature and a minimum temperature of the battery;
calculating an average temperature of the battery according to the maximum temperature and the minimum temperature; and
acquiring the SOC of the battery, and obtaining the corresponding dynamic discharge power correction factor by looking up a table according to the SOC and the average temperature.

7. The acceleration control method of the vehicle according to claim 6, wherein the average temperature of the battery is calculated by following steps:
obtaining a weighting factor corresponding to the minimum temperature by looking up a table according to the minimum temperature of the battery;
calculating the average temperature of the battery according to HVBT=X*HVBLT+(1-X)*HVBHT; where HVBT represents the average temperature of the battery, HVBLT represents the minimum temperature of the battery, HVBHT represents the maximum temperature of the battery at current time, and X represents the weighting factor.

8. The acceleration control method of the vehicle according to claim 1, wherein the short-time power assistance of the vehicle is divided into two stages;
correcting the calibration drive parameter based on the operating parameter of the drive component to obtain the target calibration drive parameter of the drive component comprises:
(Step A) acquiring a cooling water temperature, a controller temperature and a stator temperature of the electric motor;
(Step B) determining a corresponding calibration drive torque by looking up a table according to the cooling water temperature;
(Step C) in a first stage of the short-time power assistance, determining a corresponding first torque correction factor by looking up a table according to the controller temperature, and calculating a sum of the first torque correction factor and the calibration drive torque, to obtain a target calibration drive torque corresponding to the first stage; and
(Step D) in a second stage of the short-time power assistance, determining a corresponding second torque correction factor by looking up a table according to the stator temperature, and calculating a sum of the second torque correction factor and the calibration drive torque, to obtain a target calibration drive torque corresponding to the second stage.

9. The acceleration control method of the vehicle according to any one of claims 1-8, wherein acquiring the vehicle operating parameter comprises:
detecting whether a driver has a short-time power assistance intention according to the vehicle operating parameter including at least one of: a position of a gear lever, a brake pedal opening degree, an electrical park brake system state, the accelerator pedal opening degree, a rate of change in the accelerator pedal opening degree, the vehicle mode, and a difference between a requesting torque and a calibration torque; and
when it is detected that the driver has the short-time power assistance intention, detecting whether the vehicle operating parameter satisfies the short-time power assistance activation condition; and
after the short-time power assistance activation condition is satisfied, setting a short-time power assistance activation flag bit, and entering a short-time power assistance mode.

10. The acceleration control method of the vehicle according to claim 9, wherein the vehicle operating parameter for detecting whether the driver has a short-time power assistance intention further includes: the engine speed, the SOC of the battery, the actual discharge power of the battery, the battery temperature and the electric-motor temperature.

11. The acceleration control method of the vehicle according to claim 9, wherein it is determined that the driver has the short-time power assistance intention when one or more of following conditions are satisfied: the gear lever is in a drive gear, the brake pedal opening degree is zero, the electrical park brake system is not enabled, the accelerator pedal opening degree is greater than a preset pedal opening degree, the rate of change in the accelerator pedal opening degree is greater than a preset rate of change, the vehicle mode is a preset mode, and the difference between the requesting torque and the calibration torque is less than a preset torque value.

12. The acceleration control method of the vehicle according to any one of claims 1-8, wherein after correcting the calibration drive parameter based on the operating parameter of the drive component to obtain the target calibration drive parameter of the drive component, the acceleration control method of the vehicle further comprises:
when the vehicle operating parameter satisfies a short-time power assistance exit condition, exiting a short-time power assistance mode.

13. A vehicle, comprising an electronic device (5), the electronic device (5) comprising a memory (51), a processor (50), and a computer program (52) stored in the memory (51) and executable on the processor (50), wherein the processor (50), when executing the computer program (52), implements the steps of the acceleration control method of the vehicle according to any one of claims 1 to 12.

14. A computer-readable storage medium, storing a computer program (52), wherein the computer program (52), when executed on a processor (50), implements the steps of the acceleration control method of the vehicle according to any one of claims 1 to 12.

## Patentansprüche

1. Beschleunigungssteuerverfahren eines Fahrzeugs, wobei das Verfahren aufweist:
(S101) Erfassen eines Fahrzeugbetriebsparameters;
wenn der Fahrzeugbetriebsparameter eine Kurzzeitleistungsunterstützung-Aktivierungsbedingung erfüllt:
(S102) Korrigieren eines Kalibrierungsausgangsdrehmomentschwellenwerts basierend auf einem Fahrpedalöffnungsgrad und einem Fahrzeugmodus, um einen Ziel-Kalibrierungsausgangsdrehmomentschwellenwert zu erhalten, wobei der Ziel-Kalibrierungsausgangsdrehmomentschwellenwert durch Addieren eines positiven, aus einer voreingestellten Tabelle gemäß dem Fahrpedalöffnungsgrad ausgewählten Ausgangsdrehmomentkorrekturwerts zu dem Kalibrierungsausgangsdrehmomentschwellenwert erhalten wird; und
(S103) Korrigieren, als Reaktion auf die Aktivierungsbedingung, eines Kalibrierungsantriebsparameters basierend auf einem Betriebsparameter einer Antriebskomponente, um einen Ziel-Kalibrierungsantriebsparameter der Antriebskomponente zu erhalten, wobei der Ziel-Kalibrierungsantriebsparameter durch Addieren eines positiven, aus einer voreingestellten Tabelle gemäß dem Betriebsparameter ausgewählten Korrekturwerts oder -faktors zu dem Kalibrierungsantriebsparameter erhalten wird, wobei die Kurzzeitleistungsunterstützung-Aktivierungsbedingung aufweist, dass ein Verbrennungsmotor gestartet ist und eine Verbrennungsmotordrehzahl innerhalb eines Kalibrierungsdrehzahlbereichs liegt, die Betriebszustände eines Elektromotors, des Verbrennungsmotors und einer Hochvoltbatterie normal sind, ein Ladezustand, SOC, der Hochvoltbatterie größer als ein voreingestellter SOC ist, eine Differenz zwischen einer tatsächlichen Entladeleistung der Batterie und einer maximalen dynamischen Entladeleistung größer als ein voreingestellter Entladeleistungswert ist, und eine Batterietemperatur und eine Elektromotortemperatur innerhalb voreingestellter Temperaturbereiche liegen.

2. Beschleunigungssteuerverfahren des Fahrzeugs nach Anspruch 1, wobei das Korrigieren des Kalibrierungsausgangsdrehmomentschwellenwerts des Fahrzeugs basierend auf dem Fahrpedalöffnungsgrad und dem Fahrzeugmodus, um den Ziel-Kalibrierungsausgangsdrehmomentschwellenwert zu erhalten, aufweist:
(Schritt 1) Erfassen des Fahrpedalöffnungsgrads und des aktuellen Fahrzeugmodus;
(Schritt 2) Bestimmen des dem Fahrpedalöffnungsgrad entsprechenden Kalibrierungsausgangsdrehmomentschwellenwerts basierend auf dem aktuellen Fahrzeugmodus;
(Schritt 3) Bestimmen eines entsprechenden korrigierten Ausgangsdrehmomentwerts basierend auf dem Fahrpedalöffnungsgrad; und
(Schritt 4) Berechnen einer Summe aus dem korrigierten Ausgangsdrehmomentwert und dem Kalibrierungsausgangsdrehmomentschwellenwert, um den Ziel-Kalibrierungsausgangsdrehmomentschwellenwert zu erhalten.

3. Beschleunigungssteuerverfahren des Fahrzeugs nach Anspruch 1, wobei nach dem Korrigieren des Kalibrierungsausgangsdrehmomentschwellenwerts des Fahrzeugs basierend auf dem Fahrpedalöffnungsgrad und dem Fahrzeugmodus, um den Ziel-Kalibrierungsausgangsdrehmomentschwellenwert zu erhalten, und vor dem Korrigieren des Kalibrierungsantriebsparameters basierend auf dem Betriebsparameter der Antriebskomponente, um den Ziel-Kalibrierungsantriebsparameter der Antriebskomponente zu erhalten, das Beschleunigungssteuerverfahren des Fahrzeugs ferner aufweist: Begrenzen einer Leistung einer Hochvoltkomponente auf einen voreingestellten Leistungswert.

4. Beschleunigungssteuerverfahren des Fahrzeugs nach Anspruch 3, wobei die Hochvoltkomponente eine Klimaanlage und einen Gleichstrom-Gleichstrom-Wandler, DCDC-Wandler, aufweist;
wobei das Begrenzen der Leistung der Hochvoltkomponente auf den voreingestellten Leistungswert aufweist:
Einstellen einer Ausgangsleistung der Klimaanlage auf eine niedrigste Kalibrierungsstufe, die einem niedrigsten kalibrierten Ausgangsniveau entspricht;
Berechnen einer kalibrierten Ladeleistung basierend auf einem SOC einer Niedervoltbatterie auf einer Niedervoltseite des DCDC-Wandlers, wobei die kalibrierte Ladeleistung eine auf Grundlage eines Mindestspannung-Stromverbrauchs der Niedervoltbatterie berechnete Ladeleistung ist; und
Einstellen einer Ladeleistung der Niedervoltbatterie auf die kalibrierte Ladeleistung.

5. Beschleunigungssteuerverfahren des Fahrzeugs nach Anspruch 1, wobei
das Korrigieren des Kalibrierungsantriebsparameters basierend auf dem Betriebsparameter der Antriebskomponente, um den Ziel-Kalibrierungsantriebsparameter der Antriebskomponente zu erhalten, aufweist:
Erfassen einer dynamischen Entladeleistung der Batterie;
Umschalten einer Entladeleistung der Batterie auf eine kalibrierte dynamische Entladeleistung;
Erfassen eines Korrekturfaktors der dynamischen Entladeleistung; und
Korrigieren der kalibrierten dynamischen Entladeleistung durch Addieren des aus einer voreingestellten Tabelle ausgewählten Korrekturfaktors der dynamischen Entladeleistung, um eine Ziel-Kalibrierungsentladeleistung zu erhalten.

6. Beschleunigungssteuerverfahren des Fahrzeugs nach Anspruch 5, wobei das Erfassen des Korrekturfaktors der dynamischen Entladeleistung aufweist:
Erfassen einer Höchsttemperatur und einer Mindesttemperatur der Batterie;
Berechnen einer Durchschnittstemperatur der Batterie gemäß der Höchsttemperatur und der Mindesttemperatur; und
Erfassen des SOC der Batterie und Erhalten des entsprechenden Korrekturfaktors der dynamischen Entladeleistung durch Nachschlagen in einer Tabelle gemäß dem SOC und der Durchschnittstemperatur.

7. Beschleunigungssteuerverfahren des Fahrzeugs nach Anspruch 6, wobei die Durchschnittstemperatur der Batterie durch die folgenden Schritte berechnet wird:
Erhalten eines der Mindesttemperatur entsprechenden Gewichtungsfaktors durch Nachschlagen in einer Tabelle gemäß der Mindesttemperatur der Batterie;
Berechnen der Durchschnittstemperatur der Batterie gemäß HVBT=X*HVBLT+(1-X)*HVBHT; wobei HVBT die Durchschnittstemperatur der Batterie darstellt, HVBLT die Mindesttemperatur der Batterie darstellt, HVBHT die Höchsttemperatur der Batterie zum aktuellen Zeitpunkt darstellt und X den Gewichtungsfaktor darstellt.

8. Beschleunigungssteuerverfahren des Fahrzeugs nach Anspruch 1, wobei die Kurzzeitleistungsunterstützung des Fahrzeugs in zwei Stufen unterteilt ist;
wobei das Korrigieren des Kalibrierungsantriebsparameters basierend auf dem Betriebsparameter der Antriebskomponente, um den Ziel-Kalibrierungsantriebsparameter der Antriebskomponente zu erhalten, aufweist:
(Schritt A) Erfassen einer Kühlwassertemperatur, einer Temperatur der Steuerung und einer Stator-Temperatur des Elektromotors;
(Schritt B) Bestimmen eines entsprechenden Kalibrierungsantriebsdrehmoments durch Nachschlagen in einer Tabelle gemäß der Kühlwassertemperatur;
(Schritt C) in einer ersten Stufe der Kurzzeitleistungsunterstützung, Bestimmen eines entsprechenden ersten Drehmomentkorrekturfaktors durch Nachschlagen in einer Tabelle gemäß der Temperatur der Steuerung und Berechnen einer Summe aus dem ersten Drehmomentkorrekturfaktor und dem Kalibrierungsantriebsdrehmoment, um ein der ersten Stufe entsprechendes Ziel-Kalibrierungsantriebsdrehmoment zu erhalten; und
(Schritt D) in einer zweiten Stufe der Kurzzeitleistungsunterstützung, Bestimmen eines entsprechenden zweiten Drehmomentkorrekturfaktors durch Nachschlagen in einer Tabelle gemäß der Stator-Temperatur und Berechnen einer Summe aus dem zweiten Drehmomentkorrekturfaktor und dem Kalibrierungsantriebsdrehmoment, um ein der zweiten Stufe entsprechendes Ziel-Kalibrierungsantriebsdrehmoment zu erhalten.

9. Beschleunigungssteuerverfahren des Fahrzeugs nach einem der Ansprüche 1-8, wobei das Erfassen des Fahrzeugbetriebsparameters aufweist:
Erkennen, ob ein Fahrer eine Kurzzeitleistungsunterstützung beabsichtigt, gemäß dem Fahrzeugbetriebsparameter, der mindestens eines der Folgenden aufweist: eine Stellung eines Schalthebels, einen Bremspedalöffnungsgrad, einen Zustand eines elektrischen Feststellbremssystems, den Fahrpedalöffnungsgrad, eine Änderungsrate des Fahrpedalöffnungsgrads, den Fahrzeugmodus und eine Differenz zwischen einem Anforderungsdrehmoment und einem Kalibrierungsdrehmoment; und
wenn erkannt wird, dass der Fahrer die Kurzzeitleistungsunterstützung beabsichtigt, Erkennen, ob der Fahrzeugbetriebsparameter die Kurzzeitleistungsunterstützung-Aktivierungsbedingung erfüllt; und
nachdem die Kurzzeitleistungsunterstützung-Aktivierungsbedingung erfüllt ist, Setzen eines Aktivierungsflagbits der Kurzzeitleistungsunterstützung und Eintreten in einen Kurzzeitleistungsunterstützungsmodus.

10. Beschleunigungssteuerverfahren des Fahrzeugs nach Anspruch 9, wobei der Fahrzeugbetriebsparameter zum Erkennen, ob der Fahrer eine Kurzzeitleistungsunterstützungsabsicht hat, ferner aufweist: die Verbrennungsmotordrehzahl, den SOC der Batterie, die tatsächliche Entladeleistung der Batterie, die Batterietemperatur und eine Elektromotortemperatur.

11. Beschleunigungssteuerverfahren des Fahrzeugs nach Anspruch 9, wobei bestimmt wird, dass der Fahrer die Kurzzeitleistungsunterstützung beabsichtigt, wenn eine oder mehrere der folgenden Bedingungen erfüllt sind: der Schalthebel befindet sich in einem Fahrgang, der Bremspedalöffnungsgrad ist null, das elektrische Feststellbremssystem ist nicht aktiviert, der Fahrpedalöffnungsgrad ist größer als ein voreingestellter Pedalöffnungsgrad, die Änderungsrate des Fahrpedalöffnungsgrads ist größer als eine voreingestellte Änderungsrate, der Fahrzeugmodus ist ein voreingestellter Modus, und die Differenz zwischen dem Anforderungsdrehmoment und dem Kalibrierungsdrehmoment ist kleiner als ein voreingestellter Drehmomentwert.

12. Beschleunigungssteuerverfahren des Fahrzeugs nach einem der Ansprüche 1-8, wobei nach dem Korrigieren des Kalibrierungsantriebsparameters basierend auf dem Betriebsparameter der Antriebskomponente, um den Ziel-Kalibrierungsantriebsparameter der Antriebskomponente zu erhalten, das Beschleunigungssteuerverfahren des Fahrzeugs ferner aufweist:
wenn der Fahrzeugbetriebsparameter eine Kurzzeitleistungsunterstützungsaustrittsbedingung erfüllt, Verlassen eines Kurzzeitleistungsunterstützungsmodus.

13. Fahrzeug, aufweisend eine elektronische Vorrichtung (5), wobei die elektronische Vorrichtung (5) einen Speicher (51), einen Prozessor (50) und ein in dem Speicher (51) gespeichertes und auf dem Prozessor (50) ausführbares Computerprogramm (52) aufweist, wobei der Prozessor (50) bei Ausführung des Computerprogramms (52) die Schritte des Beschleunigungssteuerverfahrens des Fahrzeugs nach einem der Ansprüche 1 bis 12 implementiert.

14. Computerlesbares Speichermedium, auf dem ein Computerprogramm (52) gespeichert ist, wobei das Computerprogramm (52) bei Ausführung auf einem Prozessor (50) die Schritte des Beschleunigungssteuerverfahrens des Fahrzeugs nach einem der Ansprüche 1 bis 12 implementiert.

## Revendications

1. Procédé de commande d'accélération d'un véhicule, le procédé comprenant :
(S101) l'acquisition d'un paramètre de fonctionnement de véhicule ;
lorsque le paramètre de fonctionnement de véhicule satisfait une condition d'activation d'assistance en termes de puissance de court terme :
(S102) la correction d'un seuil de couple de sortie d'étalonnage sur la base d'un degré d'ouverture de la pédale d'accélérateur et d'un mode du véhicule afin d'obtenir un seuil de couple de sortie d'étalonnage cible, le seuil de couple de sortie d'étalonnage cible étant obtenu en ajoutant une valeur de correction de couple de sortie positive, qui est sélectionnée à partir d'une table prédéfinie en fonction du degré d'ouverture de la pédale d'accélérateur, au seuil de couple de sortie d'étalonnage ; et
(S103) la correction, en réponse à la condition d'activation, d'un paramètre d'entraînement d'étalonnage sur la base d'un paramètre de fonctionnement d'un composant d'entraînement afin d'obtenir un paramètre d'entraînement d'étalonnage cible du composant d'entraînement, le paramètre d'entraînement d'étalonnage cible étant obtenu en ajoutant une valeur de correction positive ou un facteur de correction positif, qui est sélectionné(e) à partir d'une table prédéfinie en fonction du paramètre de fonctionnement, au paramètre d'entraînement d'étalonnage, dans lequel la condition d'activation d'assistance en termes de puissance de court terme comprend le fait qu'un moteur à combustion interne est démarré et qu'une vitesse du moteur à combustion interne est à l'intérieur d'une plage de vitesses d'étalonnage, le fait que les états de fonctionnement d'un moteur électrique, du moteur à combustion interne et d'une batterie haute tension sont normaux, le fait qu'un état de charge, SOC, de la batterie haute tension est plus élevé qu'un SOC prédéfini, le fait qu'une différence entre une puissance de décharge réelle de la batterie et une puissance de décharge dynamique maximum est plus grande qu'une valeur de puissance de décharge prédéfinie et le fait qu'une température de la batterie et une température du moteur électrique sont à l'intérieur de plages de températures prédéfinies.

2. Procédé de commande d'accélération du véhicule selon la revendication 1, dans lequel la correction du seuil de couple de sortie d'étalonnage du véhicule sur la base du degré d'ouverture de la pédale d'accélérateur et du mode du véhicule afin d'obtenir le seuil de couple de sortie d'étalonnage cible comprend :
(Étape 1) l'acquisition du degré d'ouverture de la pédale d'accélérateur et du mode courant du véhicule ;
(Étape 2) la détermination du seuil de couple de sortie d'étalonnage qui correspond au degré d'ouverture de la pédale d'accélérateur sur la base du mode courant du véhicule ;
(Étape 3) la détermination d'une valeur corrigée de couple de sortie correspondante sur la base du degré d'ouverture de la pédale d'accélérateur ; et
(Étape 4) le calcul d'une somme de la valeur corrigée de couple de sortie et du seuil de couple de sortie d'étalonnage afin d'obtenir le seuil de couple de sortie d'étalonnage cible.

3. Procédé de commande d'accélération du véhicule selon la revendication 1, dans lequel, après la correction du seuil de couple de sortie d'étalonnage du véhicule sur la base du degré d'ouverture de la pédale d'accélérateur et du mode du véhicule afin d'obtenir le seuil de couple de sortie d'étalonnage cible et avant la correction du paramètre d'entraînement d'étalonnage sur la base du paramètre de fonctionnement du composant d'entraînement afin d'obtenir le paramètre d'entraînement d'étalonnage cible du composant d'entraînement, le procédé de commande d'accélération du véhicule comprend en outre : la limitation d'une puissance d'un composant haute tension à une valeur de puissance prédéfinie.

4. Procédé de commande d'accélération du véhicule selon la revendication 3, dans lequel :
le composant haute tension comprend une climatisation et un convertisseur courant continu à courant continu, DCDC ; et
la limitation de la puissance du composant haute tension à la valeur de puissance prédéfinie comprend :
le réglage d'une puissance de sortie de la climatisation à un engrenage d'étalonnage le plus bas qui correspond à un niveau de sortie étalonné le plus bas ;
le calcul d'une puissance de charge étalonnée sur la base d'un SOC d'une batterie basse tension sur un côté basse tension du convertisseur DCDC, la puissance de charge étalonnée étant une puissance de charge qui est calculée sur la base d'une consommation d'électricité de tension minimum de la batterie basse tension ; et
le réglage d'une puissance de charge de la batterie basse tension à la puissance de charge étalonnée.

5. Procédé de commande d'accélération du véhicule selon la revendication 1, dans lequel :
la correction du paramètre d'entraînement d'étalonnage sur la base du paramètre de fonctionnement du composant d'entraînement afin d'obtenir le paramètre d'entraînement d'étalonnage cible du composant d'entraînement comprend :
l'acquisition d'une puissance de décharge dynamique de la batterie ;
la commutation d'une puissance de décharge de la batterie selon une puissance de décharge dynamique d'étalonnage ;
l'acquisition d'un facteur de correction de puissance de décharge dynamique ; et
la correction de la puissance de décharge dynamique d'étalonnage en ajoutant le facteur de correction de puissance de décharge dynamique qui est sélectionné à partir d'une table prédéfinie, afin d'obtenir une puissance de décharge d'étalonnage cible.

6. Procédé de commande d'accélération du véhicule selon la revendication 5, dans lequel l'acquisition du facteur de correction de puissance de décharge dynamique comprend :
l'acquisition d'une température maximum et d'une température minimum de la batterie ;
le calcul d'une température moyenne de la batterie en fonction de la température maximum et de la température minimum ; et
l'acquisition du SOC de la batterie et l'obtention du facteur de correction de puissance de décharge dynamique correspondant en consultant une table en fonction du SOC et de la température moyenne.

7. Procédé de commande d'accélération du véhicule selon la revendication 6, dans lequel la température moyenne de la batterie est calculée au moyen des étapes suivantes :
l'obtention d'un facteur de pondération qui correspond à la température minimum en consultant une table en fonction de la température minimum de la batterie ; et
le calcul de la température moyenne de la batterie conformément à la formule HVBT = X * HVBLT + (1 - X) * HVBHT ; formule dans laquelle HVBT représente la température moyenne de la batterie, HVBLT représente la température minimum de la batterie, HVBHT représente la température maximum de la batterie à un temps courant et X représente le facteur de pondération.

8. Procédé de commande d'accélération du véhicule selon la revendication 1, dans lequel :
l'assistance en termes de puissance de court terme du véhicule est divisée selon deux étapes ; et
la correction du paramètre d'entraînement d'étalonnage sur la base du paramètre de fonctionnement du composant d'entraînement afin d'obtenir le paramètre d'entraînement d'étalonnage cible du composant d'entraînement comprend :
(Étape A) l'acquisition d'une température d'eau de refroidissement, d'une température de contrôleur et d'une température de stator du moteur électrique ;
(Étape B) la détermination d'un couple d'entraînement d'étalonnage correspondant en consultant une table en fonction de la température d'eau de refroidissement ;
(Étape C) au niveau d'une première étape de l'assistance en termes de puissance de court terme, la détermination d'un premier facteur de correction de couple correspondant en consultant une table en fonction de la température de contrôleur et le calcul d'une somme du premier facteur de correction de couple et du couple d'entraînement d'étalonnage, afin d'obtenir un couple d'entraînement d'étalonnage cible qui correspond à la première étape ; et
(Étape D) au niveau d'une seconde étape de l'assistance en termes de puissance de court terme, la détermination d'un second facteur de correction de couple correspondant en consultant une table en fonction de la température de stator et le calcul d'une somme du second facteur de correction de couple et du couple d'entraînement d'étalonnage, afin d'obtenir un couple d'entraînement d'étalonnage cible qui correspond à la seconde étape.

9. Procédé de commande d'accélération du véhicule selon l'une quelconque des revendications 1 à 8, dans lequel l'acquisition du paramètre de fonctionnement de véhicule comprend :
la détection de si un conducteur manifeste ou non une intention d'assistance en termes de puissance de court terme en fonction du paramètre de fonctionnement de véhicule qui inclut au moins un élément paramétrique parmi : une position d'un levier de changement de vitesse, un degré d'ouverture de la pédale de frein, un état de système de frein de stationnement électrique, le degré d'ouverture de la pédale d'accélérateur, un taux de variation du degré d'ouverture de la pédale d'accélérateur, le mode du véhicule et une différence entre un couple de demande et un couple d'étalonnage ; et
lorsqu'il est détecté que le conducteur manifeste l'intention d'assistance en termes de puissance de court terme, la détection de si le paramètre de fonctionnement de véhicule satisfait ou non la condition d'activation d'assistance en termes de puissance de court terme ; et
après que la condition d'activation d'assistance en termes de puissance de court terme est satisfaite, la définition d'un bit indicateur d'activation d'assistance en termes de puissance de court terme et l'entrée dans un mode d'assistance en termes de puissance de court terme.

10. Procédé de commande d'accélération du véhicule selon la revendication 9, dans lequel le paramètre de fonctionnement de véhicule pour détecter si le conducteur manifeste ou non une intention d'assistance en termes de puissance de court terme inclut en outre la vitesse du moteur à combustion interne, le SOC de la batterie, la puissance de décharge réelle de la batterie, la température de la batterie et la température du moteur électrique.

11. Procédé de commande d'accélération du véhicule selon la revendication 9, dans lequel il est déterminé que le conducteur manifeste l'intention d'assistance en termes de puissance de court terme lorsqu'une ou plusieurs des conditions suivantes est ou sont satisfaite(s) : le levier de changement de vitesse est en prise dans un engrenage d'entraînement, le degré d'ouverture de la pédale de frein est à zéro, le système de frein de stationnement électrique n'est pas activé, le degré d'ouverture de la pédale d'accélérateur est plus grand qu'un degré d'ouverture de la pédale d'accélérateur prédéfini, le taux de variation du degré d'ouverture de la pédale d'accélérateur est plus grand qu'un taux de variation prédéfini, le mode du véhicule est un mode prédéfini et la différence entre le couple de demande et le couple d'étalonnage est inférieure à une valeur de couple prédéfinie.

12. Procédé de commande d'accélération du véhicule selon l'une quelconque des revendications 1 à 8, dans lequel, après la correction du paramètre d'entraînement d'étalonnage sur la base du paramètre de fonctionnement du composant d'entraînement afin d'obtenir le paramètre d'entraînement d'étalonnage cible du composant d'entraînement, le procédé de commande d'accélération du véhicule comprend en outre :
lorsque le paramètre de fonctionnement de véhicule satisfait une condition de sortie d'assistance en termes de puissance de court terme, la sortie d'un mode d'assistance en termes de puissance de court terme.

13. Véhicule, comprenant un dispositif électronique (5), le dispositif électronique (5) comprenant une mémoire (51), un processeur (50) et un programme informatique (52) qui est stocké dans la mémoire (51) et qui peut être exécuté sur le processeur (50), dans lequel le processeur (50), lorsqu'il exécute le programme informatique (52), met en œuvre les étapes du procédé de commande d'accélération du véhicule selon l'une quelconque des revendications 1 à 12.

14. Support de stockage lisible par ordinateur, stockant un programme informatique (52), dans lequel le programme informatique (52), lorsqu'il est exécuté sur un processeur (50), met en œuvre les étapes du procédé de commande d'accélération du véhicule selon l'une quelconque des revendications 1 à 12.
